# EUROPÄISCHE PATENTSCHRIFT

(11) **EP 0 596 965 B1**
(45) Veröffentlichungstag und Bekanntmachung des Hinweises auf die Patenterteilung: **27.09.1995**
(21) Anmeldenummer: 92916325.1
(22) Anmeldetag: 29.07.1992
(51) Int. Cl.: F16N 31/00, E01B 19/00, B61K 11/00

(54) **SYSTEM ZUM AUFFANGEN VON ORGANISCHEN STOFFEN UNTERHALB VON SCHIENENFAHRZEUGEN**
SYSTEM FOR COLLECTING ORGANIC MATERIAL UNDER RAIL VEHICLES
SYSTEME COLLECTEUR DE SUBSTANCES ORGANIQUES SOUS DES VEHICULES SUR RAILS

(30) Priorität: 30.07.1991 DE 4125202
(43) Veröffentlichungstag der Anmeldung: 18.05.1994
(73) Patentinhaber: HAAG, Werner, D-27711 Osterholz-Scharmbeck (DE)
(72) Erfinder: HAAG, Werner, D-27711 Osterholz-Scharmbeck (DE)
(74) Vertreter: Merkle, Gebhard
(86) Internationale Anmeldenummer: DE9200640
(87) Internationale Veröffentlichungsnummer: WO9303303

(56) Entgegenhaltungen:
- EP-A- 0 420 363
- DE-A- 3 511 552
- FR-A- 2 656 241
- US-A- 3 722 626
- US-A- 4 010 896
- US-A- 4 484 661
- US-A- 4 875 537

## Beschreibung

Die Erfindung betrifft ein System zum Auffangen von organischen Stoffen, wie Öl und dergleichen, unterhalb von Schienenfahrzeugen, insbesondere Eisenbahnlokomotiven, mit mehreren Wannen, die nach Art eines Baukastensystems miteinander kombiniert sind, wobei einander benachbarte Wannen mit Klammern oder Profilen aneinander befestigt sind, die über einander benachbarte Kanten der Wannen greifen. Ein derartiges System ist beispielsweise aus der DE-A-35 11 552 bekannt.

Die US-A-4 875 537 beschreibt eine an der Unterseite von Fahrzeugen befestigte Ölauffangeinrichtung mit einer Bodenschicht aus einem Metallnetz, einer Zwischenschicht aus einem Isoliermaterial und einer aus einem Paar teilweise überlappender Schichten bestehenden Oberschicht aus ölabsorbierendem Material.

Bisher verwendete Systeme zum Auffangen von Flüssigkeiten unterhalb von Schienenfahrzeugen werden von einstückigen Wannen gebildet, die beispielsweise im Bahnhofsbereich dort abgestellt werden, wo später dann eine Lokomotive zu stehen kommt, um Öl und dergleichen, das von der Lokomotive hinabtropft, aufzufangen.

Die bekannten Wannen bringen insbesondere die Gefahr mit sich, daß Bahnarbeiter auf dem sich in der Wanne befindlichen Öl ausrutschen. Darüber hinaus kommt es mitunter beim Abtransport benutzter Wannen dazu, daß Öl verschüttet wird, was unter umweltpolitischen Gesichtspunkten nachteilig empfunden wird. Eine Überwachung der Wannen sowie deren Entleerung stellt mithin in weitverzweigten Bahngeländen ein großes Problem dar.

Der Erfindung liegt die Aufgabe zugrunde, ein einfach handhabbares System zum Auffangen von organischen Stoffen, wie Öl und dergleichen unterhalb von Schienenfahrzeugen, insbesondere Eisenbahnlokomotiven zu schaffen, bei dem jegliche Rutschgefahr eliminiert ist und das eine umweltverträgliche Entsorgung gewährleistet.

Diese Aufgabe wird erfindungsgemäß mit einem System des eingangs genannten Art gelöst, das dadurch gekennzeichnet ist, daß in jedes Wanne ein Absorptionswerkstoff in Form eines ersten Absorptionsvlieses vorgesehen ist, das von mindestens einem zweiten Absorptionsvlies zumindest teilweise überdeckt ist, wobei letzteres den Rand der Wanne überlappt, und daß über die jeweils oberste Lage Absorptionsvlies ein Netz gespannt ist.

Der Absorptionswerkstoff nimmt jegliche Flüssigkeit, also insbesondere auch Öl, das von einem Schienenfahrzeug verloren wird, auf, so daß keine Rutschgefahr mehr für Bahnarbeiter besteht. Ferner ist ein Verschütten von Öl und dergleichen beim Abtransport der Wannen nach Benutzung ausgeschlossen. Es besteht somit nicht mehr die Gefahr einer Umweltverschmutzung.

Bisher bekannte Ölauffangwannen mußten an ihren Seiten gewisse Abstände zu den Verschraubungen der Schienen auf den Bahnschwellen sowie von den Bahnschwellen selbst einhalten, um Abmessungstoleranzen der genannten Verschraubungen auf der einen und der Abstände von Bahnschwellen zueinander Rechnung tragen zu können.

Um aber dennoch den gesamten Bereich unterhalb von Schienenfahrzeugen lückenlos abdecken zu können, ist erfindungsgemäß vorgesehen, daß mehrere Wannen nach Art eines Baukastensystems miteinander kombiniert sind.

Um dabei zu gewährleisten, daß nicht durch übergroße Beabstandung benachbarter Wannen Lücken bei der Abdeckung der Fläche unterhalb der Schienenfahrzeuge auftreten, ist erfindungsgemäß ferner vorgesehen, daß einander benachbarte Wannen mit Klammern oder Profilen aneinander befestigt sind, die über einander benachbarte Kanten der Wannen greifen.

Das Baukastensystem erlaubt es ferner, je nach Verschmutzungsgrad nur einzelne Elemente auszutauschen bzw. zu erneuern, während weniger verschmutzte Elemente an Ort und Stelle verbleiben können.

Um zu verhindern, daß in dem Randbereich der Wanne Wasser eindringen kann, ist ferner erfindungsgemäß vorgesehen, daß in jeder Wanne ein erstes Absorptionsvlies vorgesehen ist, das von mindestens einem zweiten Absorptionsvlies zumindest teilweise überdeckt ist, wobei letzteres den Rand der Wanne überlappt.

Um das Gesamtsystem zusammenzuhalten und vor mechanischer Beschädigung zu schützen, ist schließlich erfindungsgemäß vorgesehen, daß ein Netz über die jeweils oberste Lage Absorptionsvlies gespannt ist.

Zum zuverlässigen Abdecken eventuell noch verbleibender Zwischenräume zwischen Wannen kann ferner erfindungsgemäß vorgesehen sein, daß im Falle mehrerer Wannen mindestens eines der zweiten Absorptionsvliese einander benachbarte Ränder nebeneinander stehender Wannen überlappt.

Um auch den Bereich der Verschraubungen der Schienen an den Bahnschwellen abzudecken, ist ferner erfindungsgemäß bevorzugt, daß tunnel- bzw. brückenartige Wannen vorgesehen sind.

Es können erfindungsgemäß aber auch Überdachungen zum Überdachen der Verschraubungen der Schienen an den Bahnschwellen vorgesehen sein, wobei die jeweilig den Überdachungen benachbarten Wannen Aussparungen zum Umschließen der Überdachungen aufweisen.

Erfindungsgemäß können darüber hinaus Befestigungselemente zum Befestigen der Wanne(n) an den Schienen vorgesehen sein.

Dabei können die genannten Befestigungselemente elastische sowie widerhakenförmige Abschnitte aufweisen. Dadurch ist ein schnelles und problemloses Befestigen und Lösen der Wannen an den Schienen möglich.

Zusätzlich oder alternativ dazu können erfindungsgemäß auch Verriegelungen zum Verriegeln benachbarter Wannen aneinander vorgesehen sein.

Im folgenden ist die Erfindung anhand bevorzugter Ausführungsbeispiele unter Bezugnahme auf die beiliegenden Zeichnungen mit weiteren Einzelheiten näher erläutert. Dabei zeigen
- Figur 1: eine Draufsicht auf Bahngleise mit dem erfindungsgemäßen System,
- Figur 2: einen Schnitt entlang der Linie A-A in Figur 1,
- Figur 3: einen Schnitt entlang der Linien A-A in Figur 1, jedoch nach einer alternativen Ausführungsform der Erfindung,
- Figur 4: eine Ausführungsform eines Befestigungselementes.
- Figur 5: eine Schnittansicht einer Ausführungsform einer Überdachung und
- Figur 6: eine Draufsicht auf Bahngleise mit einem weiteren Ausführungsbeispiel des erfindungsgermäßen Systems.

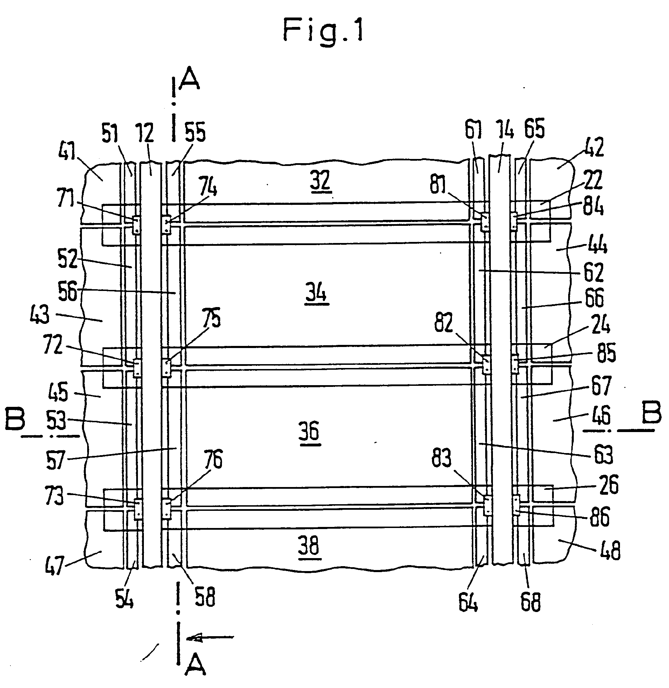

Figur 1 zeigt Schienen 12, 14 sowie Bahnschwellen 22, 24, 26, an denen die Schienen festgeschraubt sind. Die Verschraubungen 71 bis 76 bzw. 81 bis 86 sind der Übersichtlichkeit halber nur schematisch dargestellt.

Zwischen den Schienen befinden sich große Wannen 32 bis 38 sowie kleine Wannen 55 bis 58 bzw. 61 bis 64. Rechts und links der Schienen befinden sich Wannen 41 bis 48, 51 bis 54 und 65 bis 68.

Wie man unschwer der Figur 1 entnehmen kann, ist der gesamte Bereich unterhalb eines eventuell auf den Schienen stehenden Schienenfahrzeugs nahezu lückenlos durch Wannen abgedeckt. Der Übersichtlichkeit halber sind in Figur 1 die Wannen in leerem Zustand dargestellt.

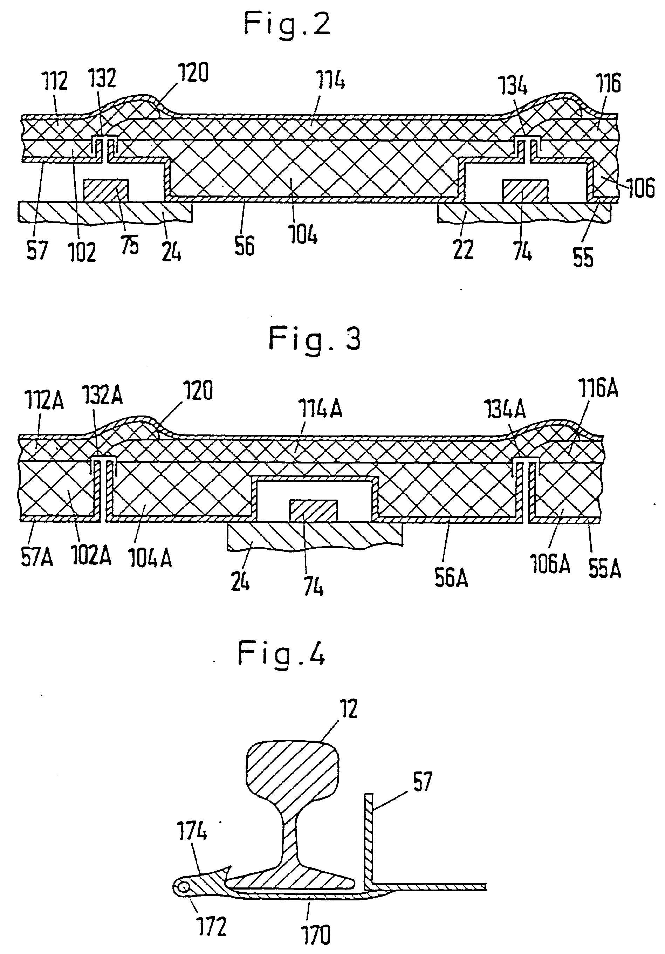

Die Figuren 2 und 3 zeigen Schnittansichten entlang der Linie A-A in Figur 1. Aus den Figuren 2 und 3 geht hervor, daß sich in den Wannen jeweils ein erstes Absorptionsvlies 102, 104, 106 bzw. 102A, 104A, 106A befindet. Das Absorptionsvlies füllt im wesentlichen die Wanne aus. Über dem genannten ersten Absorptionsvlies liegt eine zweite Lage Absorptionsvlies 112, 114, 116 bzw. 112A, 114A, 116A, wobei die letztgenannte Lage Absorptionsvlies zum einen den Randbereich der jeweiligen Wanne, zum anderen aber auch die jeweilig nächstgelegene Kante der jeweils benachbarten Wanne überlappt. Dadurch ist gewährleistet, daß kein Wasser in den Randbereich der Wannen eindringen kann. Ferner sind eventuell vorhandene Zwischenräume zwischen benachbarten Wannen von Absorptionsvlies überdeckt, so daß keinerlei Öl auf den Boden gelangen kann.

Einander benachbarte Wannen sind mittels Klammern 132, 134 bzw. 132A, 134A zusammengehalten, um ein Verschieben infolge von Vibrationen zu verhindern.

Ein Verrutschen der obersten Lage Absorptionsvlies sowie mechanische Beschädigung sind durch ein Netz 120, das das Gesamtsystem überspannt, ausgeschlossen.

An dieser Stelle sei darauf hingewiesen, daß zwar in den Figuren 2 und 3 jeweils nur Wannen 55, 56, 57 dargestellt sind, daß jedoch selbstverständlich alle anderen Wannen in gleicher Weise mit Absorptionsvlies bzw. dem darüber gespannten Netz ausgestattet sein können, wobei auch die gleichen Überlappungen vorgesehen, und benachbarte Wannen mit Klammern aneinander befestigt sind.

Gemäß den Figuren 1 und 2 stoßen einander benachbarte Wannen 55 und 56 bzw. 56 und 57 genau im Bereich von Verschraubungen 74 bzw. 75 aneinander. Die Wannen 55, 56, 57 sind daher in ihrem jeweiligen Randbereich so ausgestaltet, daß sie sich über die Verschraubungen 74 bzw. 75 erstrecken, um diese auch vor Ölverschmutzung zu bewahren.

Alternativ dazu kann gemäß Figur 3 das erfindungsgemäße System auch so ausgestaltet sein, daß die benachbart den Schienen 12 bzw. 14 angeordneten Wannen in ihrem Mittelbereich tunnelartig ausgestaltet sind, so daß sie in ihrem Mittelbereich auch die Verschraubungen 74, 75 überspannen.

Dabei sollte der entweder von aneinanderstoßenden Wannen oder von dem Mittelbereich einer einzelnen Wanne gebildete tunnelartige Bereich, der die Verschraubung überspannt, so bemessen sein, daß an den drei Seiten der Verschraubung, die nicht der Schiene benachbart sind, genügend Platz verbleibt, um eventuelle Toleranzen der Abstände der Bahnschwellen voneinander sowie der seitlichen Ausdehnung der Verschraubungen ausgleichen zu können.

Figur 4 zeigt einen Schnitt entlang der Linie B-B in Figur 1. Ein Befestigungselement 170, 172, 174, das an der Wanne 57 angebracht ist, erstreckt sich gemäß dieser Darstellung unterhalb der Schiene 12 bis auf die gegenüberliegende Seite, wo es mittels einer widerhakenförmigen Struktur 174 den Fuß der Schiene 12 umgreift. Der Abschnitt 170 des Befestigungselementes ist dabei elastisch ausgeführt. Zum Greifen per Hand oder mit einem entsprechenden Werkzeug dient ein Auge 172.

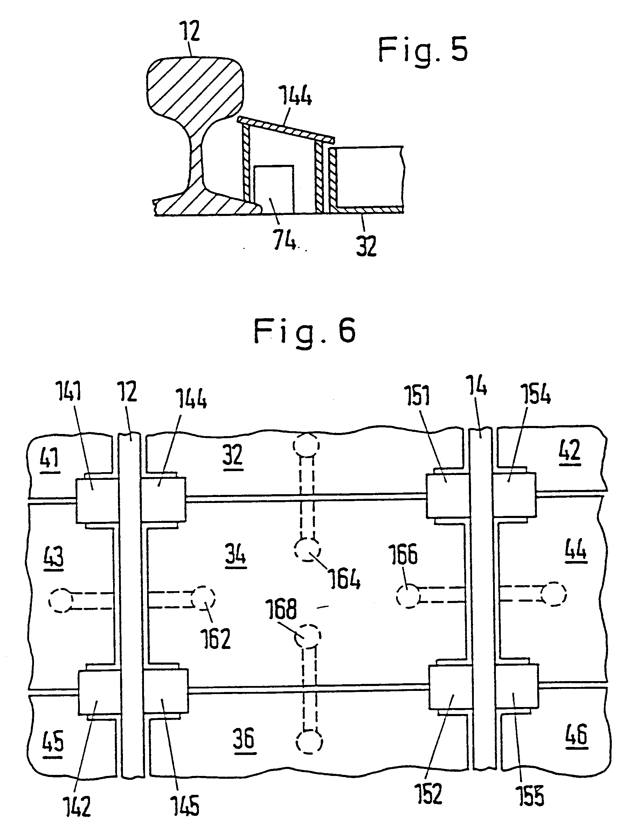

In den Figuren 5 und 6 ist eine Altenative der Erfindung gezeigt.

Gemäß Figur 5 überdacht eine Überdachung 144 die Verschraubung 74 der Schiene 12 an der darunter befindlichen Bahnschwelle (nicht gezeigt).

Gemäß Figur 6 erstrecken sich die Mittelwannen 32, 34 und 36 sowie die Außenwannen 41 bis 46 bis unmittelbar an die Schiene heran, ohne daß kleinere schmale Wannen dazwischen vorgesehen sind. Die Wannen weisen in diesem Fall Aussparungen auf, mit denen sie die Überdachungen 141 bis 155 umschließen, wobei die Überdachungen eine schräge Oberseite haben, die über den Rand der jeweils benachbarten Wanne hinausragt, so daß Öl und dergleichen, das von oben auf die Verschraubung bzw. die darüber befindlichen Überdachung tropft, in die jeweilig benachbarten Wannen eingeleitet wird.

Verriegelungen 162 bis 168, die sich unterhalb der Wannen befinden und ggf. auch unterhalb der Schienen verlaufen, dienen alternativ oder zusätzlich zu den oben erwähnten Klammern 132, 134 zur Befestigung bzw. Arretierung der Wannen aneinander und an den Schienen.

Es sei ausdrücklich darauf hingewiesen, daß die beiden oben beschriebenen Arten der Befestigung von Wannen an den Schienen nur beispielhaften Charakter haben und daß selbstverständlich auch andere Befestigungsmöglichkeiten denkbar sind.

Als Werkstoff für das Absorptionsvlies kommt insbesondere Polypropylen in Betracht.

Die Wannen sowie das Netz sind bevorzugt aus UV- und chemikalienbeständigem Kunststoff, insbesondere Polyethylen.

## Patentansprüche

1. System zum Auffangen von organischen Stoffen, wie Öl und dergleichen, unterhalb von Schienenfahrzeugen, insbesondere Eisenbahnlokomotiven, mit mehreren Wannen (32 bis 68), die nach Art eines Baukastensystems miteinander kombiniert sind, wobei einander benachbarte Wannen (32 bis 68) mit Klammern (132, 134) oder Profilen aneinander befestigt sind, die über einander benachbarte Kanten der Wannen (32 bis 68) greifen, **dadurch gekennzeichnet**, daß in jeder Wanne (32 bis 68) ein Absorptionswerkstoff in Form eines ersten Absorptionsvlieses (102,104,106) vorgesehen ist, das von mindestens einem zweiten Absorptionsvlies (112,114,116) zumindest teilweise überdeckt ist, wobei letzteres den Rand der Wanne (32 bis 68) überlappt, und daß über die jeweils oberste Lage Absorptionsvlies (112,114,116) ein Netz (120) gespannt ist.

2. System nach Anspruch 1, **dadurch gekennzeichnet**, daß mindestens eines der zweiten Absorptionsvliese (112,114,116) einander benachbarte Ränder nebeneinanderstehender Wannen (32 bis 68) überlappt.

3. System nach einem der vorangehenden Ansprüche, **dadurch gekennzeichnet**, daß tunnel- bzw. brückenartige Wannen (51 bis 68) vorgesehen sind.

4. System nach einem der vorangehenden Ansprüche, **gekennzeichnet durch** Überdachungen (141 bis 145, 151 bis 155) zum Überdachen der Verschraubungen der Schienen (12,14) an den Bahnschwellen (22,24,26), wobei die jeweilig den Überdachungen (141 bis 145, 151 bis 156) benachbarten Wannen (32 bis 36, 41 bis 46) Aussparungen zum Umschließen der Überdachungen (141 bis 145, 151 bis 156) aufweisen.

5. System nach Anspruch 4, **gekennzeichnet durch** Befestigungselemente (170,172,174) zum Befestigen der Wannen (32 bis 68) an den Schienen (12,14).

6. System nach Anspruch 5, **dadurch gekennzeichnet**, daß die Befestigungselemente elastische (170) sowie widerhakenförmige (174) Abschnitte aufweisen.

7. System nach einem der vorangehenden Ansprüche, **gekennzeichnet durch** Verriegelungen (162 bis 168) zum Verriegeln benachbarter Wannen (32 bis 36,41 bis 46) aneinander.

## Claims

1. A system for collecting organic material, such as oil, etc. underneath rail vehicles, in particular railway locomotives, the system having a plurality of pans (32-68) which are combined with each other in the manner of a modular system, with neighboring pans (32-68) being fastened to one another by means of clamps (132, 134) or sections gripping over neighboring edges of said pans (32-68), characterized in that each of said pans (32-68) has provided therein an absorption material in the form of a first absorptive nonwoven fabric (102, 104, 106) that is covered by at least one second absorptive nonwoven fabric (112, 114, 116) at least partly, the latter lapping over the edge of said pan (32-68), and that a net (120) is stretched over the respectively uppermost layer of absorptive nonwoven fabric (112, 114, 116).

2. A system according to claim 1, characterized in that at least one of said second absorptive nonwoven fabrics (112, 114, 116) laps over neighboring edges of adjacent pans (32-68).

3. A system according to claims 1 or 2, characterized in that tunnel- or bridge-like pans (51-68) are provided.

4. A system according to any of claims 1-3, characterized by roofs (141-145, 151-155) for covering screw connections of said rails (12, 14) on said sleepers (22, 24, 26), the pans (32-36, 41-46) which are respectively adjacent to said roofs (141-145, 151-156) comprising recesses for surrounding said roofs (141-145, 151-156).

5. A system according to claim 4, characterized by fastening elements (170, 172, 174) for fastening said pans (32-68) to said rails (12, 14).

6. A system according to claim 5, characterized in that said fastening elements comprise elastic (170) as well as barb-shaped (174) sections.

7. A system according to any of claims 1-6, characterized by locking means (162-168) for locking neighboring pans (32-36, 41-46) to one another.

## Revendications

1. Système collecteur de substances organiques, telles que de l'huile ou analogues, sous des véhicules sur rails, en particulier des locomotives ferroviaires, comprenant plusieurs cuves (32 à 68) combinées ensemble à la manière d'un système de construction par blocs, les cuves adjacentes (32 à 68) étant fixées les unes aux autres par des brides (132, 134) ou des profilés qui exercent une saisie par-dessus des bords adjacents des cuves (32 à 68), caractérisé en ce qu'il est prévu dans chaque cuve (32 à 68) une matière d'absorption sous la forme d'un premier matelas d'absorption (102, 104, 106) qui est recouvert au moins partiellement par au moins un second matelas d'absorption (112, 114, 116), ce dernier chevauchant le bord de la cuve (32 à 68), et en ce qu'un filet (120) est tendu pardessus le matelas d'absorption (112, 114, 116) situé en position supérieure.

2. Système suivant la revendication 1, caractérisé en ce qu'au moins l'un au moins des seconds matelas d'absorption (112, 114, 116) chevauche des bords voisins de cuves adjacentes (32 à 68).

3. Système suivant l'une des revendications précédentes, caractérisé en ce qu'il est prévu des cuves (51 à 68) en forme de tunnel ou de pont.

4. Système suivant l'une des revendications précédentes, caractérisé par des éléments de couverture (141 à 145, 151 à 155) pour recouvrir les organes de vissage des rails (12, 14) sur les traverses (22, 24, 26), les cuves (32 à 36 , 41 à 46) voisines des éléments de couverture (141 à 145, 151 à 156) comportant des évidements pour entourer les éléments de couverture (141 à 145; 151 à 156).

5. Système suivant la revendication 4, caractérisé par des éléments de fixation (170, 172, 174) pour fixer les cuves (32 à 68) sur les rails (12, 14).

6. Système suivant la revendication 5, caractérisé en ce que les éléments de fixation comprennent des portions élastiques (170) et en forme de harpon (174).

7. Système suivant l'une des revendications précédentes, caractérisé par des verrous (162 à 168) pour verrouiller les unes aux autres les cuves voisines (32 à 36, 41 à 46).
